# FASCICULE DE BREVET EUROPEEN

(11) **EP 1 240 367 B1**
(45) Date de publication et mention de la délivrance du brevet: **26.05.2004**
(21) Numéro de dépôt: 00985405.0
(22) Date de dépôt: 05.12.2000
(51) Int. Cl.: D01F 9/133, D06C 7/04, F27B 9/28, F27D 23/00, C21D 9/56, F16J 15/40

(54) **BOITE D'ETANCHEITE POUR UNE ENCEINTE DE TRAITEMENT EN CONTINU DE PRODUIT MINCE EN BANDE**
ABDICHTUNGSKASTEN FÜR EINEN KONTINUIERLICHEN BEHANDLUNGSRAUM VON DÜNNEN BANDEN PRODUKTEN
SEALED ENCLOSURE FOR A CHAMBER FOR CONTINUOUSLY TREATING A CONTINUOUS LENGTH OF A THIN PRODUCT

(30) Priorité: 06.12.1999 FR 9915332
(43) Date de publication de la demande: 18.09.2002
(73) Titulaire: Snecma Propulsion Solide, 33187 Le Haillan Cedex (FR)
(72) Inventeur: BAUDRY, Yvon, Florence, KY 41042 (US); EVRARD, Hervé, F-33185 Le Haillan (FR); LAXAGUE, Michel, F-33200 Bordeaux Cauderan (FR)
(74) Mandataire: Joly, Jean-Jacques
(86) Numéro de dépôt international: PCT/FR2000/003386
(87) Numéro de publication internationale: WO 2001/042542

(56) Documents cités:
- EP-A- 0 075 438
- DE-A- 19 846 749
- GB-A- 1 479 886
- US-A- 2 199 521
- US-A- 2 977 106
- US-A- 4 681 536
- PATENT ABSTRACTS OF JAPAN vol. 006, no. 214 (C-131), 27 octobre 1982 (1982-10-27) & JP 57 117624 A (MITSUBISHI RAYON KK), 22 juillet 1982 (1982-07-22)
- PATENT ABSTRACTS OF JAPAN vol. 10, no. 94 (C-338) [2151], 11 avril 1986 (1986-04-11) & JP 60 224713 A (DAIDO TOKUSHUKO KK), 9 novembre 1985 (1985-11-09)

## Description

### Domaine de l'invention

L'invention concerne les installations de traitement en continu de produit en bande, tel que film, nappe, tissu, ou autre substrat mince fibreux ou non fibreux.

Un domaine particulier d'application de l'invention est le traitement en continu de produits en bande dans un four pour y former un dépôt, y réaliser un traitement de surface ou y réaliser une carbonisation. L'invention vise notamment, mais non exclusivement la carbonisation en continu de substrats fibreux tels que tissus ou nappes de fibres ou fils.

### Arrière-plan de l'invention

Des installations de production de tissus de fibres de carbone par carbonisation en continu de tissus de fibres en précurseur de carbone sont connues. On pourra se référer en particulier au brevet de la Fédération de Russie RU 2 005 829.

Le tissu à carboniser, par exemple formé de fibres de cellulose, défile de façon continue dans un four dans lequel est réalisée la transformation par pyrolyse du précurseur de carbone, de sorte qu'un tissu en fibres de carbone est récupéré de façon continue en sortie du four.

La pyrolyse est réalisée sous atmosphère inerte, par injection d'un gaz, par exemple de l'azote, dans des zones d'extrémité d'entrée et de sortie du four. Le gaz inerte est extrait, avec les effluents de pyrolyse, par des cheminées s'ouvrant dans différentes zones du four.

L'étanchéité de l'intérieur du four doit être assurée pour éviter la sortie d'effluents de pyrolyse vers l'extérieur à travers l'entrée et la sortie du four et l'entrée d'air vers l'intérieur du four. La sortie d'effluents à l'entrée et à la sortie du four, outre qu'elle rendrait leur élimination plus malaisée, provoquerait une pollution du tissu par condensation ou dépôt de goudrons véhiculés par les effluents. L'air pénétrant dans le four pourrait oxyder le tissu et, par le refroidissement produit, pourrait également provoquer une condensation indésirable d'effluents de pyrolyse.

Une bonne étanchéité peut être assurée par pression d'un boudin ou rouleau sur le tissu. Il en résulte toutefois un frottement important qui induit une tension sur le tissu. Or, lors de la carbonisation, le tissu peut subir un important retrait. Le retrait est sensiblement libre dans le sens trame, mais l'application d'une tension par frottement par exemple de rouleaux empêche le retrait de s'effectuer librement dans le sens chaîne. Il en résulte un embuvage en trame excessif du tissu obtenu.

Un moyen d'étanchéité statique particulier comprenant des joints gonflables agissant sur les faces opposées d'un tissu défilant à l'entrée et à la sortie d'une enceinte est décrit dans le document GB 1 479 886. Les joints gonflables sont sous forme de tubes en caoutchouc logés dans des tubes rigides fendus longitudinalement. Sous l'effet de la pression, les tubes en caoutchouc font saillie à travers les fentes pour s'appliquer de façon étanche sur les faces opposées du tissu passant entre les tubes rigides.

Une bonne étanchéité peut aussi être assurée par un joint dynamique formé par un courant de gaz neutre, tel qu'un joint d'azote. Toutefois, il en résulterait une perturbation de l'aérodynamique interne du four, avec, en plus, un refroidissement des effluents de pyrolyse entraînant les inconvénients déjà mentionnés. En outre, une telle solution n'est pas adaptée lorsque des conditions particulières de pression doivent être maintenues dans le four.

### Objet et résumé de l'invention

L'invention a pour but de remédier à ces inconvénients et, d'une façon plus générale, a pour but de proposer une boîte d'étanchéité pour une enceinte de traitement en continu de produit en bande qui assure une excellente étanchéité,
- sans perturber l'aérodynamique interne de l'enceinte,
- en maintenant l'intérieur de l'enceinte à la pression désirée, et
- sans exercer sur le produit en bande une tension susceptible de perturber son comportement ou son aspect.

Ce but est atteint, conformément à l'invention, grâce à une boîte d'étanchéité comprenant :
- un passage longitudinal s'ouvrant à une première extrémité de la boîte destinée à être raccordée à une entrée ou sortie de l'enceinte, et à une deuxième extrémité opposée à la première,
- une surface de support à l'intérieur du passage, sur laquelle peut défiler un produit en bande entre les extrémités de la boîte, et
- des moyens d'étanchéité statiques comportant au moins un joint souple gonflable disposé transversalement dans le passage, au-dessus de la surface de support, et agissant par contact avec un produit en bande défilant dans le passage sur la surface de support, boîte dans laquelle, conformément à l'invention :

- des moyens d'étanchéité dynamiques sont en outre prévus dans le passage, entre la deuxième extrémité de la boîte et les moyens d'étanchéité statiques, et comportent des moyens d'injection de gaz dans au moins une chambre formée dans le passage.

La combinaison de moyens d'étanchéité statiques et de moyens d'étanchéité dynamiques permet d'utiliser des moyens d'étanchéité statiques exerçant une force de frottement minimale sur le produit en bande en défilement. Ainsi, le joint gonflable est de préférence gonflé sous une pression excédant la pression atmosphérique de moins de 500 Pa. Il est en outre réalisé en un matériau sur lequel des produits minces peuvent glisser avec un minimum de frottement, par exemple en un tissu enduit de silicone.

Ainsi, avec une boîte d'étanchéité conforme à l'invention, il est possible de limiter la tension exercée sur le produit en bande en défilement. Dans le cas où le produit en bande est un tissu subissant une carbonisation dans l'enceinte, l'écart entre le retrait sensiblement libre en sens trame (exprimé en pourcentage) et le retrait en sens chaîne (également exprimé en pourcentage) peut être limité à une valeur inférieure à 5 %.

Les moyens d'étanchéité dynamiques comportent avantageusement des moyens d'injection de gaz dans une chambre délimitée par le joint gonflable et une paroi disposée transversalement dans le passage. De préférence, les moyens d'étanchéité dynamiques comportent plusieurs chambres adjacentes séparées les unes des autres par des parois disposées transversalement dans le passage, chaque chambre étant munie d'une ouverture d'injection ou d'extraction de gaz. Dans cette configuration, une chambre d'extraction est située entre deux chambres d'injection.

Avantageusement, la ou chaque paroi délimitant une chambre est munie d'une bavette souple à son extrémité adjacente au trajet d'un tissu dans le passage, par exemple une bavette en tissu enduit de silicone. La bavette n'assure pas une fonction d'étanchéité statique, de sorte qu'elle n'exerce pas d'effort significatif sur un produit en bande défilant dans le passage.

Selon une particularité de l'invention, le joint souple gonflable est formé de plusieurs sections adjacentes alignées en direction transversale dans le passage, chaque section étant munie de moyens de gonflage particuliers afin de pouvoir régler de façon indépendante la pression de gonflage dans chaque section du joint.

De la sorte, il est possible d'exercer sur le produit en bande un effort variable dans la direction transversale. Dans un cas où le produit en bande est un tissu. subissant une carbonisation, on peut alors contrôler le droit fil en compensant un décadrage du tissu lors de la carbonisation, c'est-à-dire une déformation du tissu par incurvation des trames.

### Brève description des dessins

L'invention sera mieux comprise à la lecture de la description faite ci-après à titre indicatif, mais non limitatif, en référence aux dessins annexés, sur lesquels :
- la figure 1 est une vue très schématique d'une partie d'installation de carbonisation en continu de tissu ;
- la figure 2 est une vue en coupe longitudinale d'un mode de réalisation conforme à l'invention d'une boîte d'étanchéité du four de l'installation de la figure 1 ;
- la figure 3 est une vue partielle en coupe transversale selon le plan III-III de la figure 2 ;
- la figure 4 est une vue partielle d'un tissu décadré ; et
- la figure 5 est une vue très schématique en coupe transversale d'une variante de réalisation d'un joint gonflable dans une boîte d'étanchéité conforme à l'invention.

### Description détaillée de modes de réalisation préférés

Dans la description qui suit, un mode de réalisation de l'invention est décrit dans le cas de l'application à la carbonisation en continu de tissu. Comme déjà indiqué, l'invention est toutefois applicable plus généralement à tout produit en bande qui est traité en continu dans une enceinte. Par produit en bande, on entend ici un produit tel que film, substrat mince fibreux ou non fibreux. Parmi les substrats fibreux, outre les tissus, peuvent être concernées les nappes fibreuses unidirectionnelles ou multidirectionnelles. En outre, l'invention est plus généralement applicable aux produits en bande destinés à subir divers types de traitement dans une enceinte, par exemple formation de dépôts, traitement de surface, transformation physique ou chimique, dès lors que l'on cherche plus particulièrement à éviter l'application d'une tension notable sur le produit en bande et la perturbation des conditions aérodynamiques et de pression dans l'enceinte.

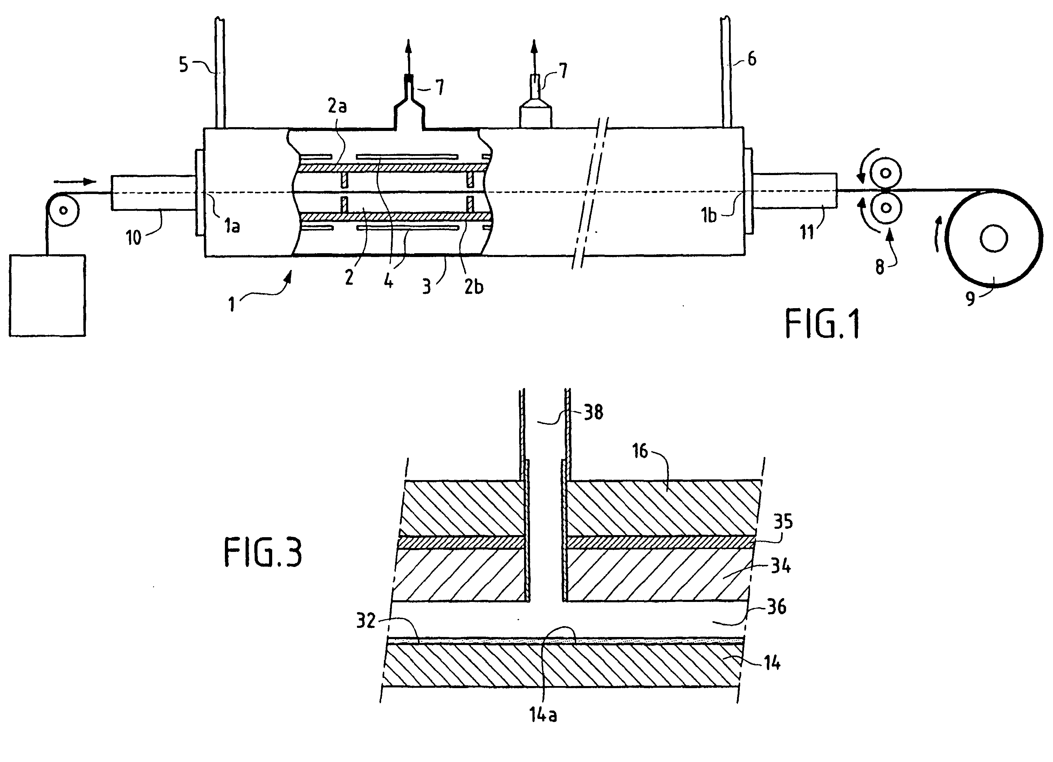

Dans l'installation montrée très schématiquement sur la figure 1, un tissu T est carbonisé par défilement continu dans un four 1. Le tissu T, qui a subi éventuellement un prétraitement, est prélevé d'un réceptacle dans lequel il a été précédemment stocké, par exemple par bambannage.

Le tissu T est en fibres de précurseur de carbone, par exemple en fibres cellulosiques. Le prétraitement du tissu peut consister en une imprégnation par un composé organo-silicié permettant de conserver des bonnes propriétés mécaniques pour le tissu carbonisé. Un tel prétraitement est décrit notamment dans le brevet de la Fédération de Russie RU 2 047 674.

Le four 1 comporte une chambre de pyrolyse 2, dont les parois sont réalisées par exemple en graphite, logée à l'intérieur d'une enveloppe 3. La chambre 2 a une section transversale de forme rectangulaire aplatie définissant un passage pour le tissu entre une entrée de four 1a et une sortie de four 1b. Des résistances de chauffage 4 sont disposées sur les faces extérieures des parois supérieure 2a et inférieure 2b de la chambre de pyrolyse 2, dans l'enveloppe 3. Plusieurs ensembles de résistances de chauffage peuvent être répartis en direction longitudinale afin de définir une succession de zones susceptibles d'être portées à des températures différentes dans la chambre de pyrolyse.

Des tubulures 5, 6 permettent d'alimenter l'intérieur de la chambre de pyrolyse 2 par un gaz neutre, tel que l'azote, au voisinage des extrémités longitudinales 1a, 1b du four 1. Le gaz neutre, ainsi que les effluents gazeux de pyrolyse sont extraits de la chambre de pyrolyse à travers des cheminées 7 réparties le long du four 1.

Le défilement du tissu dans le four est commandé par un dispositif d'appel 8, en sortie du four, et le tissu en fibres de carbone obtenu est stocké par exemple par enroulement sur une bobine 9. La carbonisation du tissu entraîne un retrait important, pouvant atteindre environ 30 % avec un tissu à précurseur cellulosique lorsqu'il est carbonisé à l'état libre, sans tension. Il existe donc une différence de vitesse du tissu relativement importante entre l'entrée et la sortie du four.

Des boîtes d'étanchéité 10, 11 traversées par le tissu sont placées respectivement à l'entrée et à la sortie du four 1 pour éviter une entrée d'air extérieur dans le four ou un échappement d'effluents de pyrolyse hors du four.

Un four de carbonisation en continu de tissu tel que brièvement décrit ci-avant est connu notamment du brevet de la Fédération de Russie RU 2 005 829.

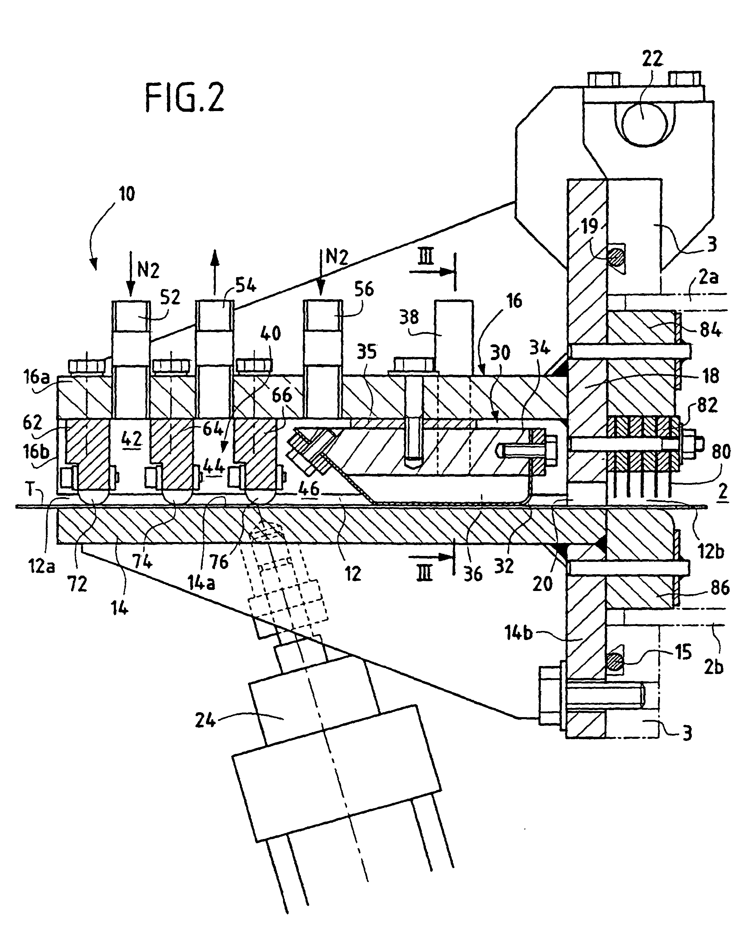

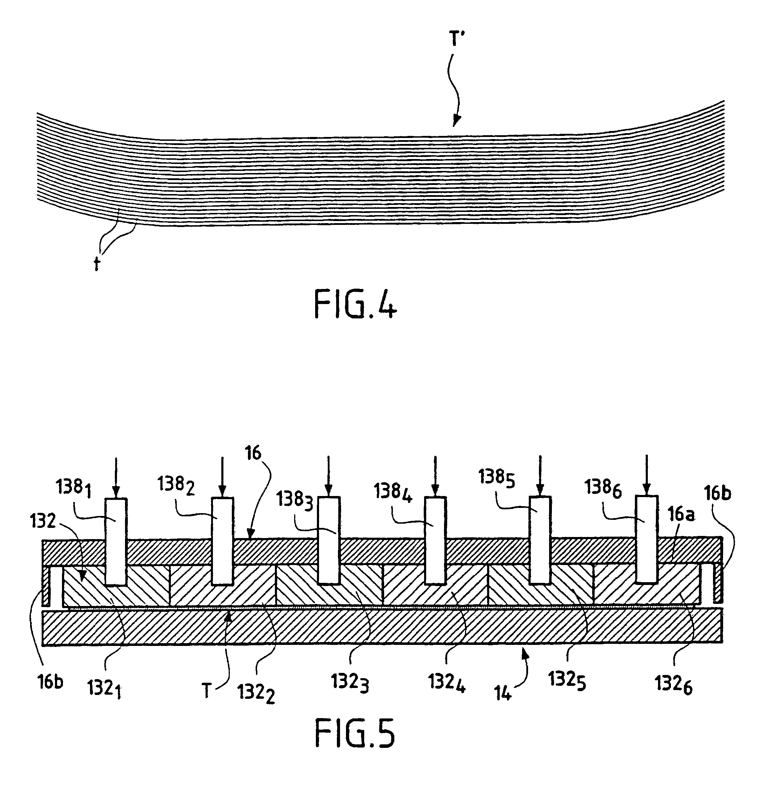

Un mode de réalisation conforme à l'invention de la boîte d'étanchéité 10 située en entrée du four 1 sera maintenant décrit de façon plus détaillée en référence aux figures 2 et 3.

La boîte 10 définit un passage longitudinal 12 pour le tissu T entre une extrémité amont 12a (dans le sens de défilement du tissu), et une extrémité aval 12b. A l'extrémité aval, le passage 12 se raccorde à l'entrée de la chambre de pyrolyse 2 du four.

Dans l'exemple illustré, la boîte 10 est formée par une embase 14, ou enclume, qui définit une surface de support horizontale 14a pour le tissu défilant dans le passage 12, et par un couvercle 16 ayant une paroi supérieure 16a et des parois latérales 16b qui définissent le passage 12. A son extrémité aval, le couvercle a une paroi de fond 18 qui définit, avec l'embase 14, une fente 20 de sortie du tissu hors de la boîte 10. La paroi de fond 18 se prolonge au-dessus du couvercle 16 et est reliée par une articulation d'axe horizontal 22 à l'enveloppe 3. Un joint d'étanchéité 19 est comprimé entre la paroi 18 et l'enveloppe 3 lorsque le couvercle 16 est fermé. L'embase 14 présente un rebord 14b à son extrémité aval fixé sur l'enveloppe 3 avec interposition d'un joint d'étanchéité 15. La boîte d'étanchéité 10 renferme des moyens d'étanchéité statiques 30 et des moyens d'étanchéité dynamiques 40.

Les moyens d'étanchéité statiques 30 comprennent un joint gonflable 32 qui s'étend transversalement dans le passage 12 au voisinage de l'extrémité aval 12b. Le joint 32 est formé par une bande de matériau souple fixée le long de ses bords sur une base 34 en délimitant avec elle un volume 36. La base 34 est elle-même fixée au couvercle 16 avec interposition d'une caie d'étanchéité 35. Le joint 32 peut être prégonfié, ou être muni d'une conduite d'alimentation 38 en gaz de gonflage, par exemple en azote.

La pression du joint 32 sur le tissu T défilant sur la surface de support 14a doit être limitée, de même que le frottement entre le joint et le tissu, afin de ne pas induire d'efforts de tension sur le tissu qui, du fait du retrait important lors de la carbonisation, pourraient se traduire par une déformation ou un embuvage excessifs des fils de trame du tissu en fibres de carbone obtenu.

A cet effet, la pression dans le joint 32, c'est-à-dire dans le volume 36, dépasse la pression atmosphérique d'une quantité inférieure à 500 Pa, de préférence comprise entre 0 Pa et 50 Pa. Lorsque le couvercle est fermé, le joint 32 s'aplatit sur le tissu T (figures 2 et 3). En outre, le matériau constitutif du joint est choisi pour minimiser le frottement avec le tissu. Il est par exemple constitué par un tissu enduit de silicone. D'autres matériaux peuvent être utilisés, tels que du tissu enduit de polytétrafluoroéthylène ou une membrane élastomère par exemple une membrane silicone.

Les moyens d'étanchéité dynamiques 40 comportent, dans l'exemple illustré, des chambres 42, 44, 46 situées dans le passage 12 entre l'extrémité amont 12a et le joint gonflable 32. Un gaz neutre, par exemple de l'azote, est injecté dans les chambres 42 et 46 par des conduites respectives 52, 56 traversant le couvercle 16 et s'ouvrant dans le passage 12. Le gaz neutre est extrait de la chambre 44, située entre les chambres 42 et 46 au moyen d'une conduite d'aspiration 54 traversant le couvercle 16 et s'ouvrant dans le passage 12.

Les chambres sont délimitées par des parois métalliques 62, 64, 66 qui s'étendent transversalement dans le passage 12. La paroi 62 est située à proximité de l'extrémité amont 12a et délimite la chambre d'injection 42 avec la paroi 64. La chambre d'extraction 44 est délimitée par des parois 64 et 66, tandis que la chambre d'injection 46 est délimitée par la paroi 66 et le joint 32.

Les parois 62, 64, 66 sont fixées au couvercle 16 et appliquées de façon étanche sur celui-ci le long de leurs bords supérieurs. Le long de leurs bords inférieurs, les parois 62, 64, 66 sont munies de bavettes 72, 74, 76 qui affleurent à la surface du tissu T. Les bavettes 72, 74 , 76 sont formées dans un matériau identique ou semblable à celui du joint 32, par exemple en tissu enduit de silicone. On notera que les bavettes 72, 74, 76 n'exercent pas de pression sur le tissu T et n'induisent donc pas de tension.

Les chambres 42, 44, 46 permettent de s'opposer efficacement à une entrée d'air extérieur. Le gaz neutre injecté dans la chambre 46 adjacente au joint gonflable 32 est repris par la chambre d'extraction 44. Si une fraction faible de ce gaz parvient à franchir le joint statique 32, elle est insusceptible de perturber l'écoulement des gaz dans la chambre de pyrolyse et s'ajoute en fait au gaz introduit par la tubulure 5. De préférence, les chambres 42 et 46 sont alimentées en gaz neutre avec un débit inférieur à 10 % du débit total injecté dans le four par les tubulures 5 et 6.

Bien que l'on ait envisagé la réalisation des moyens d'étanchéité dynamiques avec une chambre d'extraction de gaz neutre située entre deux chambres d'injection, d'autres dispositions sont possibles, par exemple en rajoutant une ou plusieurs paires de chambres d'injection et d'extraction, ou en se limitant à la seule chambre d'injection 46, l'extraction du gaz neutre se produisant alors à travers l'entrée 12a de passage 12.

Avantageusement, le joint gonflable 32 est protégé de la chaleur rayonnant hors de la chambre de pyrolyse 2 à l'entrée du four. A cet effet, un ou plusieurs écrans thermiques 80 s'étendent transversalement dans le passage 12 à son extrémité. Les écrans 80 sont par exemple des feuilles de graphite fixées à la paroi de fond 18 du couvercle, du côté extérieur, avec interposition de cales isolantes 82, par exemple en céramique.

A son extrémité aval, la boîte 10 s'engage dans l'extrémité amont de la chambre de pyrolyse 2 par l'intermédiaire de bandeaux transversaux 84, 86 en matériau isolant thermique, par exemple en céramique ou métal réfractaire qui sont fixés sur les faces extérieures de la paroi 18 et du rebord 14b et s'engagent entre les parois supérieure et inférieure 2a, 2b de la chambre 2.

Dans l'exemple illustré, la boîte d'étanchéité 10 est sous forme d'une embase surmontée d'un couvercle pivotant. Le couvercle peut être manoeuvré au moyen de vérins 24. Cette disposition permet un accès aisé au passage 14, au début d'un cycle de carbonisation, pour introduire l'extrémité du tissu T. Bien entendu, d'autres formes de réalisation de la boîte pourront être prévues, par exemple avec couvercle vissé.

On a décrit ci-avant une boîte d'étanchéité 10 située en entrée de four. La boîte d'étanchéité 11 située à la sortie du four peut être réalisée de façon similaire, en adoptant une disposition symétrique de celle de la boîte 10 par rapport au milieu du trajet du tissu T dans le four. Dans ce cas, dans la boîte 11, le joint gonflable d'étanchéité statique est situé au voisinage de la sortie du four, c'est-à-dire au voisinage de l'extrémité amont de la boîte 11 qui se raccorde à la sortie du four, tandis que les moyens d'extrémité dynamiques sont disposés en aval du joint gonflable.

L'application d'une pression sur le tissu dans la boîte d'étanchéité 11 est moins critique que dans la boîte d'étanchéité 10, puisque le tissu sortant du four a subi son retrait. Le joint d'étanchéité statique de la boîte 11 pourrait donc en variante être réalisé sous forme de rouleau ou bavette classique, et les moyens d'étanchéité dynamiques pourront être omis.

Une installation de carbonisation en continu avec des boîtes d'étanchéité en entrée et en sortie de four du type de celle illustrée par les figures 3 et 4 a été utilisée pour la carbonisation de tissu de rayonne à armure satin. La pression dans le joint gonflable d'étanchéité statique était réglée à 10 Pa au-dessus de la pression atmosphérique. La faible tension induite sur le tissu s'est traduite par un retrait en sens chaîne de 27 % alors que le retrait en sens trame, qui est sensiblement égal au potentiel maximum de retrait du tissu sans tension, était de 30 %.

Une variante de réalisation de la boîte d'étanchéité 10 en entrée du four de carbonisation sera maintenant décrite en référence aux figures 4 et 5.

La figure 4 illustre un type de déformation du tissu T' en fibres de carbone, telle qu'elle peut résulter d'une hétérogénéité de la température du four en direction transversale, c'est-à-dire dans la largeur du four, ou d'une hétérogénéité de retrait du tissu lors de la carbonisation, ou d'un défaut de qualité de coutures servant à rabouter des largeurs de tissus. Cette déformation, ou décadrage, se traduit par une déformation des trames t du tissu.

Une correction de cette déformation, afin de rétablir le droit fil du tissu, peut être réalisée en freinant certaines parties de la chaîne du tissu (non montrée sur la figure 4) plus que d'autres parties, avant l'entrée du tissu dans le four. Les parties de chaîne soumises à un freinage plus important subissent un moindre retrait, ce qui peut compenser une déformation en trame.

Une action différentielle sur des parties de la chaîne du tissu peut être réalisée au moyen d'une boîte d'étanchéité qui se distingue de celle des figures 2 et 3 en ce que les moyens d'étanchéité statiques sont constitués par un joint gonflable 132 (figure 5) partagé en plusieurs sections adjacentes 132₁, 132₂, ..., 132₆ alignées dans la direction transversale. Chaque segment de joint est alimenté en gaz de gonflage par une conduite d'alimentation particulière respective 138₁, 138₂, ..., 138₆ traversant le couvercle 16. En commandant sélectivement les pressions dans les sections de joint, on exerce des efforts réglables sur différentes parties de la chaîne du tissu T défilant sur l'embase 14. L'ajustement des pressions est réalisé à partir de l'observation d'un décadrage du tissu issu du four.

Un tel moyen de contrôle du droit fil du tissu en fibres de carbone est particulièrement avantageux, en termes de simplicité et encombrement, en comparaison avec les systèmes bien connus utilisant des ensembles de rouleaux biais et rouleaux courbes asservis en position et en rotation.

## Revendications

1. Boîte d'étanchéité pour une enceinte dans une installation de traitement en continu de produit en bande, comprenant :
- un passage longitudinal (12) s'ouvrant à une première extrémité de la boîte destinée à être raccordée à une entrée ou sortie de l'enceinte (1), et à une deuxième extrémité opposée à la première,
- une surface de support (14a) à l'intérieur du passage, sur laquelle peut défiler un produit en bande (T) entre les extrémités de la boîte, et
- des moyens d'étanchéité statiques (30) comportant au moins un joint gonflable (32) disposé transversalement dans le passage (12), au-dessus de la surface de support (14a), et agissant par contact avec un produit en bande défilant dans le passage sur la surface de support,
**caractérisée en ce que** :
- des moyens d'étanchéité dynamiques (40) sont en outre prévus dans le passage, entre la deuxième extrémité de la boîte et les moyens d'étanchéité statiques, et comportent des moyens (52, 56) d'injection de gaz dans au moins une chambre (42, 46) formée dans le passage.

2. Boîte d'étanchéité selon la revendication 1, **caractérisée en ce que** le joint gonflable (32) est gonflé à une pression excédant la pression atmosphérique de moins de 500 Pa.

3. Boîte d'étanchéité selon l'une quelconque des revendications 1 et 2, **caractérisée en ce que** le joint gonflable (32) est relié à une conduite d'alimentation en gaz (38).

4. Boîte d'étanchéité selon l'une quelconque des revendications 1 à 3, **caractérisée en ce qu'**elle comporte des moyens (56) d'injection de gaz dans une chambre (46) délimitée par le joint gonflable (32) et une paroi (66) disposée transversalement dans le passage.

5. Boîte d'étanchéité selon l'une quelconque des revendications 1 à 4, **caractérisée en ce que** les moyens d'étanchéité dynamiques comportent plusieurs chambres adjacentes (42, 44, 46) séparées les unes des autres par des parois (62, 64, 66) disposées transversalement dans le passage, chaque chambre étant munie d'une ouverture d'injection ou d'extraction de gaz.

6. Boîte d'étanchéité selon la revendication 5, **caractérisée en ce qu'**elle comporte au moins une chambre d'extraction (44) située entre deux chambres d'injection (42, 46).

7. Boîte d'étanchéité selon l'une quelconque des revendications 4, 5 et 6, **caractérisée en ce que** la ou chaque paroi (62, 64, 66) délimitant une chambre est munie d'une bavette souple (72, 74, 76) à son extrémité adjacente au trajet d'un tissu dans le passage (12).

8. Boîte d'étanchéité selon l'une quelconque des revendications 1 à 7, **caractérisée en ce qu'**au moins un écran thermique (80) est interposé entre le joint gonflable (32) et la première extrémité de la boîte.

9. Boîte d'étanchéité selon l'une quelconque des revendications 1 à 8, **caractérisée en ce qu'**elle comporte une embase (14), formant ladite surface de support (14a) et un couvercle (16) délimitant ledit passage (12).

10. Boîte d'étanchéité selon la revendication 9, **caractérisée en ce que** le couvercle (16) est articulé par rapport à l'embase (14).

11. Boîte d'étanchéité selon l'une quelconque des revendications 1 à 10, **caractérisée en ce que** le joint souple gonflable est formé de plusieurs sections adjacentes (132₁, ..., 132₆) alignées en direction transversale dans le passage, chaque section étant munie de moyens de gonflage particuliers (138₁, ..., 138₆) afin de pouvoir régler de façon indépendante la pression de gonflage dans chaque section de joint.

12. Procédé de contrôle du droit fil d'un tissu en fibres de carbone issu d'un four d'une installation de carbonisation en continu munie, en entrée du four, d'une boîte d'étanchéité selon la revendication 11, **caractérisé en ce que** les pressions de gonflage des sections du joint souple sont commandées sélectivement en fonction d'un décadrage éventuel du tissu.

13. Installation de carbonisation en continu d'un substrat fibreux en bande comprenant un four muni, au moins en entrée, d'une boîte d'étanchéité selon l'une quelconque des revendications 1 à 11.

## Patentansprüche

1. Dichtungskasten für einen Raum in einer Anlage zur fortlaufenden Behandlung eines bahnenförmigen Produkts, mit:
- einem Längsdurchgang (12), der sich an einem ersten Ende des Kastens, das an einen Eingang oder Ausgang des Raumes (1) angeschlossen werden soll, und an einem zweiten, dem ersten gegenüberliegenden Ende öffnet,
- einer Stützfläche (14a) in dem Durchgang, an der ein bahnenförmiges Produkt (T) zwischen den Enden des Kastens vorbeilaufen kann, und
- statischen Dichtungsmitteln (30) mit wenigstens einer aufblasbaren Dichtung (32), die quer in dem Durchgang (12) oberhalb der Stützfläche (14a) angeordnet ist und durch Kontakt mit einem bahnenförmigen Produkt, welches in dem Durchgang an der Stützfläche vorbeiläuft, wirkt,
**dadurch gekennzeichnet, dass**:
- außerdem dynamische Dichtungsmittel (40) in dem Durchgang zwischen dem zweiten Ende des Kastens und den statischen Dichtungsmitteln vorgesehen sind und Mittel (52, 56) zum Einspritzen von Gas in wenigstens eine in dem Durchgang gebildete Kammer (42, 46) aufweisen.

2. Dichtungskasten nach Anspruch 1, **dadurch gekennzeichnet, dass** die aufblasbare Dichtung (32) auf einen Druck aufgeblasen wird, der den atmosphärischen Druck um weniger als 500 Pa übersteigt.

3. Dichtungskasten nach irgendeinem der Ansprüche 1 und 2, **dadurch gekennzeichnet, dass** die aufblasbare Dichtung (32) mit einer Gaszuführleitung (38) verbunden ist.

4. Dichtungskasten nach irgendeinem der Ansprüche 1 bis 3, **dadurch gekennzeichnet, dass** er Mittel (56) zum Einspritzen von Gas in eine Kammer (46) enthält, welche durch die aufblasbare Dichtung (32) und eine in dem Durchgang quer angeordnete Wand (66) begrenzt ist.

5. Dichtungskasten nach irgendeinem der Ansprüche 1 bis 4, **dadurch gekennzeichnet, dass** die dynamischen Dichtungsmittel mehrere benachbarte Kammern (42, 44, 46) aufweisen, die durch in dem Durchgang quer angeordnete Wände (62, 64, 66) voneinander getrennt sind, wobei jede Kammer mit einer Öffnung zum Einspritzen oder zum Abziehen von Gas versehen ist.

6. Dichtungskasten nach Anspruch 5, **dadurch gekennzeichnet, dass** er wenigstens eine Abzugkammer (44) aufweist, die zwischen zwei Einspritzkammern (42, 46) gelegen ist.

7. Dichtungskasten nach irgendeinem der Ansprüche 4, 5 und 6, **dadurch gekennzeichnet, dass** die oder jede eine Kammer begrenzende Wand (62, 64, 66) an ihrem dem Weg eines Gewebes in dem Durchgang (12) benachbarten Ende mit einer flexiblen Klappe (72, 74, 76) versehen ist.

8. Dichtungskasten nach irgendeinem der Ansprüche 1 bis 7, **dadurch gekennzeichnet, dass** wenigstens ein Wärmeschild (80) zwischen der aufblasbaren Dichtung (32) und dem ersten Ende des Kastens angeordnet ist.

9. Dichtungskasten nach irgendeinem der Ansprüche 1 bis 8, **dadurch gekennzeichnet, dass** er eine die Stützfläche (14a) bildende Fußplatte (14) und einen den Durchgang (12) begrenzenden Deckel (16) aufweist.

10. Dichtungskasten nach Anspruch 9, **dadurch gekennzeichnet, dass** der Deckel (16) gegenüber der Fußplatte (14) angelenkt ist.

11. Dichtungskasten nach irgendeinem der Ansprüche 1 bis 10, **dadurch gekennzeichnet, dass** die flexible aufblasbare Dichtung von mehreren aneinander grenzenden Abschnitten (132₁, ..., 132₆) gebildet ist, die in Querrichtung in dem Durchgang ausgerichtet sind, wobei jeder Abschnitt mit eigenen Aufblasmitteln (138₁, ...., 138₆) versehen ist, um den Aufblasdruck in jedem Dichtungsabschnitt unabhängig einstellen zu können.

12. Verfahren zum Steuern der geraden Faser eines Gewebes aus Kohlenstofffasern, das aus einem Ofen einer Anlage zum fortlaufenden Karbonisieren ausgetreten ist, welche am Eingang des Ofens mit einem Dichtungskasten nach Anspruch 11 versehen ist, **dadurch gekennzeichnet, dass** die Aufblasdrücke der Abschnitte der flexiblen Dichtung in Abhängigkeit von einer eventuellen Verzerrung des Gewebes selektiv gesteuert werden.

13. Anlage zum fortlaufenden Karbonisieren eines bahnenförmigen Fasersubstrats, mit einem Ofen, der wenigstens eingangseitig mit einem Dichtungskasten nach irgendeinem der Ansprüche 1 bis 11 ausgestattet ist.

## Claims

1. A sealing box for an enclosure in an installation for continuously treating a strip product, the box comprising:
- a longitudinal passage (12) opening out from the box via a first end for connection to an inlet or an outlet of the enclosure (1), and via a second end, opposite from the first;
- a support surface (14a) inside the passage, on which a strip product (T) can travel between the ends of the box; and
- static sealing means (30) comprising at least one inflatable gasket (32) placed across the passage (12), above the support surface (14a) and acting by coming into contact with the strip product travelling along the passage on the support surface;
the box being **characterised in that**:
- dynamic sealing means (40) are also provided in the passage between the second end of the box and the static sealing means, the dynamic sealing means comprising means (52, 56) for injecting gas into at least one chamber (42, 46) formed in the passage.

2. A sealing box according to claim 1, **characterised in that** the inflatable gasket (32) is inflated to a pressure that exceeds atmospheric pressure by less than 500 Pa.

3. A sealing box according to claim 1 or claim 2, **characterised in that** the inflatable gasket (32) is connected to a gas feed pipe (38).

4. A sealing box according to any one of claims 1 to 3, **characterised in that** it has means (56) for injecting gas into a chamber (46) defined by the inflatable gasket (32) and by a wall (66) extending across the passage.

5. A sealing box according to any one of claims 1 to 4, **characterised in that** dynamic sealing means comprise a plurality of adjacent chambers (42, 44, 46) that are separated from one another by walls (62, 64, 66) extending across the passage, each chamber being provided with a respective gas injection or extraction opening.

6. A sealing box according to claim 5, **characterised in that** it has at least one extraction chamber (44) situated between two injection chambers (42, 46).

7. A sealing box according to any one of claims 4, 5, and 6, **characterised in that** the or each wall (62, 64, 66) defining a chamber is provided with a flexible bib (72, 74, 76) at its end adjacent to the path of cloth along the passage (12).

8. A sealing box according to any one of claims 1 to 7, **characterised in that** at least one heat screen (80) is interposed between the inflatable gasket (32) and the first end of the box.

9. A sealing box according to any one of claims 1 to 8, **characterised in that** it comprises a base (14) forming said support surface (14a), and a cover (16) together defining said passage (12).

10. A sealing box according to claim 9, **characterised in that** the cover (16) is hinged relative to the base (14).

11. A sealing box according to any one of claims 1 to 10, **characterised in that** the inflatable gasket is in the form of a plurality of adjacent sections (132₁, ..., 132₆) placed side by side across the passage, each section being provided with respective inflation means (138₁, ..., 138₆) so as to enable the inflation pressure in each section of the gasket to be adjusted independently.

12. A method of controlling the straightness of the grain of the carbon fibre cloth coming from a furnace in a continuous carbonising installation provided at the inlet of the furnace with a sealing box according to claim 11, the method being **characterised in that** the inflation pressures of the flexible gasket sections are controlled selectively as a function of any registering inaccuracy in the cloth.

13. An installation for continuously carbonising a strip of fibre substrate, the installation comprising a furnace provided, at least at its inlet, with a sealing box according to any one of claims 1 to 11.
